Europäisches Patentamt

European Patent Office

Office européen des brevets

(11) Publication number: **0 418 763 B1**

## EUROPEAN PATENT SPECIFICATION

(45) Date of publication of patent specification: **10.05.95**　(51) Int. Cl.⁶: **B62D  6/02**

(21) Application number: **90117785.7**

(22) Date of filing: **15.09.90**

(54) **Power steering apparatus.**

(30) Priority: **19.09.89 JP 109809/89 U**

(43) Date of publication of application:
**27.03.91 Bulletin  91/13**

(45) Publication of the grant of the patent:
**10.05.95 Bulletin  95/19**

(84) Designated Contracting States:
**DE FR GB**

(56) References cited:
**WO-A-88/01959**
**DE-A- 2 710 849**
**DE-A- 3 532 249**

**J. Reimpell, Fahrwerktechnik: Lenkung,
Vogel-Buchverlag, DE-Würzburg**

(73) Proprietor: **KOYO SEIKO CO., LTD.**
**5-8, Minamisemba 3-chome**
**Chuo-ku**
**Osaka 542 (JP)**

(72) Inventor: **Noguchi, Masahiko, c/o Koyo Seiko
Co., Ltd.**
**No. 5-8, Minamisemba 3-chome,**
**Chuo-ku**
**Osaka, 542 (JP)**

(74) Representative: **Selting, Günther, Dipl.-Ing. et
al**
**Patentanwälte**
**von Kreisler, Selting, Werner**
**Postfach 10 22 41**
**D-50462 Köln (DE)**

Rank Xerox (UK) Business Services
(3. 10/3.0 9/3.3.3)

**Description**

This invention relates to a hydraulic power steering apparatus using a hydraulic actuator as a steering assisting power source.

A hydraulic power steering apparatus which assists by hydraulic pressure strength required for steering has hitherto been widely used not only for a large-sized vehicle, such as a truck or a motorbus, but also for a small-sized vehicle, such as an ordinary passenger car.

The power steering apparatus disposes a hydraulic actuator, such as a hydraulic cylinder, in a steering mechanism for converting rotation of a steering wheel into steering motion, and a hydraulic control valve for performing hydraulic charge control corresponding to operation of the steering wheel halfway of a hydraulic supply route to the hydraulic cylinder. The hydraulic cylinder generates steering assisting power by hydraulic pressure supplied through the hydraulic control valve, so that the steering assisting power assists steering motion, thereby reducing power to operate the steering wheel for steering the vehicle. A mode of disposing the hydraulic cylinder for steering assisting is different in a type of a steering mechanism. There is a steering mechanism of the so-called recirculating ball screw type, which converts the rotation of steering wheel into axial movement of a ball nut screwable through a ball screw thread with a shaft connected to the steering wheel and rotation of a sector gear screwable with a rack axially extending outside the ball nut, and steers wheels of the vehicle through a proper link mechanism. The hydraulic cylinder for steering assisting at such steering mechanism often uses the ball nut as a piston. In this case, action of the hydraulic cylinder is converted into steering motion through operation converting means comprising the rack and sector gear.

In a vehicle provided with such power steering apparatus, a resultant force of a manual force $W_r$ obtained by directly converting into steering motion a steering torque applied to the steering wheel by a driver and steering assisting power $W_s$ generated by the hydraulic cylinder corresponding to the steering torque performs steering, so that the total resultant force W is given in the following equation:

$$W = W_r + W_s \quad (1)$$

The manual force $W_r$ in the equation (1), in the vehicle provided with a steering mechanism of the recirculating ball screw type, is obtained by a steering torque $T_r$ applied to the steering wheel, a module m of the sector gear, the number Z of teeth of the sector gear, and a lead p of ball screw thread, and given in the following equation:

$$W_r = T_r \cdot \frac{\pi \cdot m \cdot Z}{p} \quad \cdots (2)$$

The steering assisting power $W_s$ is obtained from charged hydraulic pressure $P_m$ to the hydraulic cylinder, a cylinder's area A (a cross-sectional area of ball nut) and the module m and number Z of teeth, as given in the following equation:

$$W_s = A \cdot P_m \cdot \frac{m \cdot Z}{2} \quad \cdots (3)$$

The steering for an automobile is carried out against road reaction power acting on the wheels. Since the magnitude of the road reaction power corresponds to the vehicle speed, although a large total resultant force W is required for steering while stopping and running at low speed, a relatively small total resultant force W can perform steering while running at high speed. Accordingly, in the aforesaid power steering apparatus, a relatively large steering assisting power $W_s$ is required to be generated for reducing as much as possible the steering torque applied to the steering wheel in order to obtain the manual force $W_r$. On the other hand, when an equivalent steering assisting power $W_s$ is generated during the high speed running, a small force applied to the steering wheel performs the steering, whereby a drawback is created in that the running safety is hindered. Hence, it is required to generate steering assisting power $W_s$ as small as possible during the high speed running.

2

In order to meet such demand, various suggestions have hitherto been made. A power steering apparatus according to the precharacterizing part of claim 1 is disclosed in JP-A-61105273 or in JP-A-61132466. It is provided at a hydraulic control valve for charging hydraulic pressure to the hydraulic cylinder with a hydraulic reaction power unit which introduces therein hydraulic pressure corresponding to the vehicle speed so as to generate hydraulic reaction power corresponding to the hydraulic pressure, thereby restricting action of hydraulic control valve by the reaction power. The hydraulic reaction power unit thus operates to hinder charge of hydraulic pressure to the hydraulic cylinder following an increase in the vehicle speed, thereby reducing hydraulic pressure ($P_m$ in the equation (3)) charged to the hydraulic cylinder. As the result, the steering assisting power $W_s$ decreases as the vehicle speed increases. Accordingly, during the high speed running, most of total resultant force W required for steering is provided by the manual force $W_r$ by operating the steering wheel and proper rigidity is applied to the steering wheel. On the other hand, during the stop and low speed running, most of larger total resultant force W for steering is provided by the larger steering assisting power $W_s$ generated by the hydraulic cylinder, thereby enabling the manual force $W_r$ to be reduced.

For example, an oil passage connected to a low pressure source through a movable throttle and a fixed throttle is formed at the discharge side of a hydraulic pump for generating the constant pressure so as to change a degree of opening of the movable throttle corresponding to variation in the vehicle speed, whereby the hydraulic pressure introduced into the hydraulic reaction power unit and corresponding to the vehicle speed is obtainable between both the throttles. Also, as disclosed in the Japanese Utility Model Application Publication No. Sho 60-38219 by the applicant of the present invention, it is possible to obtain hydraulic pressure corresponding to the vehicle speed by use of a vehicle speed sensor pump connected in association with an output shaft of a transmission gear and driven at the speed corresponding to the vehicle speed.

For variation in steering power depending on variation in the vehicle speed, a sufficient countermeasure, such that the hydraulic reaction power unit is provided together with the hydraulic control valve, has hitherto been taken. However, in spite that it is known that power required for steering the vehicle increases following an increase in a steering angle, an effective remedy has not been taken for the above matter at the conventional power steering apparatus. Accordingly, when a large operation of steering wheel must be repeated for putting the car into a garage or widthwise moving it, a sufficient steering assisting power $W_s$ is not generated, thereby creating a defect that a large burden of labor is compelled to operation of steering wheel.

The steering assisting power $W_s$ generated by the hydraulic cylinder for steering assisting is given as shown in the equation (3), so that the charged hydraulic pressure $P_m$ to the hydraulic cylinder or the cylinder's area A can be increased to expect an increase in $W_s$. However, when the charged hydraulic pressure $P_m$ and cylinder's area A are set in consideration of generation of sufficient steering assisting power $W_s$ at a large steering angle, a large-sized hydraulic pump as a source for generating hydraulic pressure, an increase in power consumption by the hydraulic pump and a large-sized apparatus as a whole, will be necessary. Accordingly, it is not said to be an actual remedy that $P_m$ or A is increased to ensure the steering assisting power $W_s$ at a large steering angle.

DE-A-35 32 249 discloses a power steering apparatus with a hydraulic actuator providing an assisting force for the operation of a steering wheel, which converts both the assisting force of the hydraulic actuator and a torque exerted on the steering wheel to a steering motion applied to wheels of a car. The assisting force provided by the hydraulic actuator is variable according to the parameters speed of the car, steering torque and angular velocity of the steering wheel. A program controls the pressurization of the hydraulic actuator according to established curves dependent of the parameters. It is thus possible to influence the assisting force of the power steering apparatus to be reduced at low torques or high speed and to be strengthened at higher torques or lower speed. The assisting force increases non-linearily. Therefore, a high capacity for changing the intensity of actuation of the hydraulic actuator is necessary.

WO-A-8801959 discloses a power steering apparatus with a hydraulic actuator providing an assisting force to the torque of a steering wheel of a car. The torque manually imposed to the steering wheel is transferred to a nut member moved by an output shaft connected to an input shaft which is turned by the steering wheel. There is provided a rack along the nut member to interact with a sector gear which is connected to the wheels of the car. The power steering apparatus comprises a valve body integral with the output shaft supporting a rotative spool, whereby the pressurization of the hydraulic chambers applying force on the actuator is controlled. In result, the assisting force increases non-linearly according to the progressing steering angle and additionally to the speed of the car. The sector gear linearly converts the displacement movement of the actuator to a rotative steering motion of the wheels.

3

EP 0 418 763 B1

A power steering apparatus of the Mercedes 190 is known from "J. Reimpel, Fahrwerktechnik: Lenkung, Vogel-Buchverlag, DE-Würzburg, 1984". This power steering apparatus shows a rotatable sector gear with changing pitch engaging with a rack of a steering apparatus for converting the action of the rack into a steering motion of the wheels of a vehicle depending from the steering angle of a steering wheel. The assisting force transferred by the sector gear is non-linear.

It is the object of the invention to provide a power steering apparatus having a hydraulic reaction power unit that generates an increasing steering assisting power at low vehicle speed when the steering angle increases, without increasing the capacity of the hydraulic actuator or hydraulic pressure.

The power steering apparatus of the present invention is defined by claim 1.

This power steering apparatus can generate a large steering assisting power without increasing a cylinder area at the hydraulic cylinder for assisting the steering operation or charging a large hydraulic pressure when the steering angle is large, and reduces a burden of labor when a car is put into a garage or widthwise moved.

When the action of hydraulic actuator is converted into the steering motion, the steering motion quantity is reduced as the motion leads to the end of rotation range of steering wheel, that is, as the steering angle increases. As the result, the steering assisting power obtained by converting strength of hydraulic actuator into the steering motion increases following an increase in the steering angle.

The above and further advantages and features of the invention will more fully be apparent from the following detailed description with accompanying drawings, wherein:

Fig. 1 is a longitudinally sectional view showing a principal portion of a power steering apparatus of the present invention,

Fig. 2 is an enlarged view of tooth profile of a sector gear used in the power steering apparatus of the present invention, and

Fig. 3 is a graph showing the relation between a steering angle and steering assisting power at the power steering apparatus of the present invention.

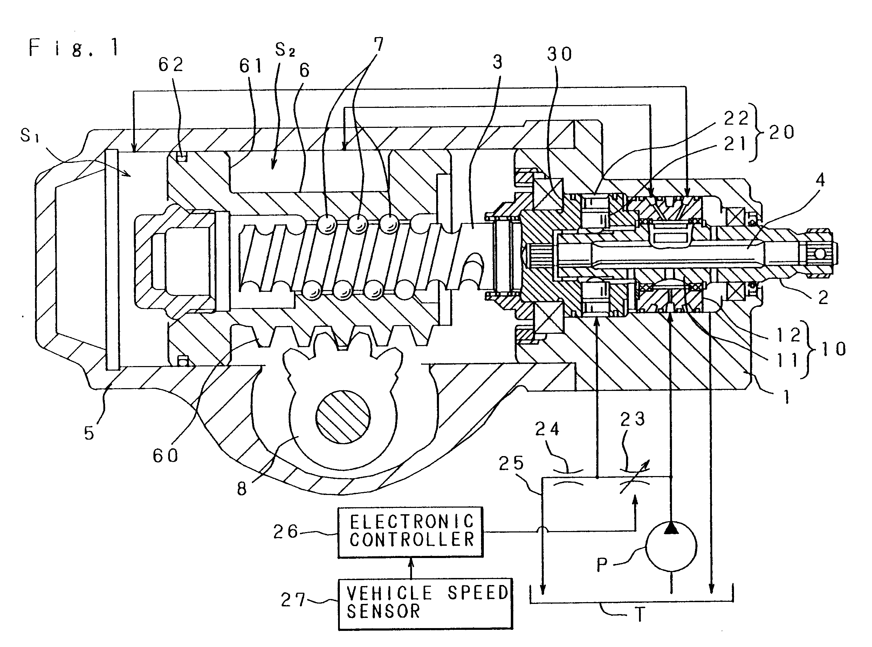

In Fig. 1, reference numeral 2 designates an input shaft and 3 designates an output shaft, which are supported in a common cylindrical housing 1 and co-axially rotatable. A cylinder 30 is provided at abutting ends of the output shaft 3 and input shaft 2. The hollow input shaft 2 is inserted inside the cylinder 30 as shown, and supported at one axial end by a bearing bush fixedly fitted in the cylinder 30. The input shaft 2 and output shaft 3 are coaxially connected with each other through a torsion bar 4 inserted inside the hollow portion of input shaft 2 and pin-coupled and press-fit-fixed at both axial ends with both the shafts 2 and 3. An upper end (the right-hand end in the drawing) of input shaft 2 projecting outwardly from the housing 1 is connected to a steering wheel (not shown), the input shaft 2 and the output shaft 3 connected thereto through the torsion bar 4 rotating following rotation of the steering wheel.

Below the housing 1 is connected a bottomed cylinder housing 5, in which a nut member 6 forming at the inner periphery thereof ball screw thread is axially slidably housed. A lower half of the output shaft 3 projecting to the cylinder housing 5 is a screw thread shaft provided at the outer periphery thereof in a range of a predetermined length with ball screw thread corresponding to the ball screw thread at the inner periphery of nut member 6, and is screwed therewith through a large number of balls 7. Within the cylinder housing 5 is disposed a sector gear 8 rotatable around the axis perpendicular to the output shaft 3 and nut member 6, the sector gear 8 being engaged with a rack 60 formed at the outside of nut member 6 in a predetermined axial length. A rotary shaft of sector gear 8 is connected to a link mechanism for steering through a pitman arm (not shown) outside the cylinder housing 5. The rotation of output shaft 3 in response to the rotation of steering wheel is converted into axially sliding motion of nut member 6 through the ball screw thread, the sliding motion being converted into rotation of the sector gear 8 engageable with the rack 60, thereby performing steering corresponding to the rotation of steering wheel.

The nut member 6 is provided with a cylindrical portion having at the outside the rack 60 and a disc 61 connected to the lower portion of the cylindrical portion, the disc 61 being fitted in the cylinder housing 5 through a sealing member 62 wound onto the outer periphery of the disc 61. Therefore, the hydraulic cylinder for generating the steering assisting power uses as a piston the nut member 6 slidable in the cylinder housing 5 and has two oil chambers $S_1$ and $S_2$ sealed at both sides of the disc 61 in a liquid-tight manner. The nut member 6 is biased by a pressure difference generated between the oil chambers $S_1$ and $S_2$ so that the sliding motion of nut member 6 caused by the pressure difference is converted into the steering motion through the rack 60 and sector gear 8, thereby carrying out steering assisting.

Both the oil chambers $S_1$ and $S_2$ at the hydraulic cylinder are connected to a hydraulic pump P of the hydraulic pressure source and to an oil tank T through a hydraulic control valve 10 constituted at the joint of input shaft 2 and output shaft 3. The input shaft 2 and output shaft 3 are connected with each other through the torsion bar 4 so that, when the steering wheel is subjected to a steering torque, torsion corresponding

4

there to is caused at the torsion bar 4 to create relative angular displacement between both the shafts 2 and 3. The hydraulic control valve 10 shown in the drawing controls feed of pressure oil to both the oil chambers $S_1$ and $S_2$ at the hydraulic cylinder by use of the relative angular displacement, and is, as well-known, provided with a spool 11 formed on the way of the input shaft 2 integrally therewith, and with a cylindrical valve body 12 fitted on the spool 11 and in the housing 1 and connected to the cylindrical portion 30 at the upper end of output shaft 3. Between the spool 11 and the valve body 12 are formed two kinds of movable throttles by oil grooves formed at the outer periphery of the spool 11 and at the inner periphery of the valve body 12 respectively, the movable throttles changing the degree of opening in the reverse direction corresponding to the relative angular displacement in such a manner that when one throttle is open (or closed), the other is closed (or open). One movable throttle is interposed between the hydraulic pump P and the oil chamber $S_1$ and between the oil tank T and the oil chamber $S_2$, the other being interposed between the hydraulic pump P and the oil chamber $S_2$ and between the oil tank T and the oil chamber $S_1$. When the steering wheel is subjected to the steering torque and relative angular displacement is generated between the spool 11 and the valve body 12 so that, for example; one oil chamber $S_1$ at the hydraulic cylinder increases the degree of opening of the throttle at a side of communicating with the hydraulic pump P of high pressure source, the other oil chamber $S_2$ increases the same at a side of communicating with the oil tank T maintained at the low pressure condition, at which time a pressure difference corresponding to intensity of steering torque is created from the oil chamber $S_1$ toward that $S_2$ and between both the oil chambers $S_1$ and $S_2$, thereby generating hydraulic pressure strength in the direction corresponding to the steering torque, thereby performing the aforesaid steering assisting.

In order to limit the action of pressure oil feed by strength corresponding to the vehicle speed, a hydraulic reaction power unit 20 is juxtaposed under the hydraulic control valve 10. The hydraulic pressure reaction power unit 20, as disclosed in many well-known examples, such as the Japanese Patent Application Laid-Open No. Sho 61-200063 by the applicant for the present invention, is provided at the cylindrical portion 30 of the upper end of output shaft 3 with a plurality of bores perforating outside and inside the cylindrical portion 30, and plungers 21 are radially slidably movably inserted in the bores respectively. At the outside of cylindrical portion 30 is formed an annular oil chamber 22 enclosed with the cylindrical portion 30 and housing 1 and communicating the respective bores with each other. The hydraulic reaction power unit 20 applies to the outer end face of each plunger 21 the hydraulic pressure introduced into the annular oil chamber 22 and corresponding to the vehicle speed so as to bring the inner end face of each plunger 21 into press-contact with the outer periphery of the input shaft 2 positioned inside the cylindrical portion 30. Hence, the relative angular displacement of the input shaft 2 with respect to the output shaft 3, in other words, the relative angular displacement between the spool 11 and the valve body 12 at the hydraulic control valve 10, is restrained by the strength corresponding to the hydraulic pressure, that is, the vehicle speed.

At the discharge side of the hydraulic pump P is formed a by-pass oil passage 25 connecting a discharge port of pump P and the oil tank T through a movable throttle 23 and a fixed throttle 24 in this order. The hydraulic pressure introduced into the annular oil chamber 22 is obtained between both the throttles 23 and 24 at the by-pass oil passage 25. The degree of opening of movable throttle 23 is adjusted according to an open-close signal from an electronic controller 26. The electronic controller 26 generates the open-close signal in order to increase the degree of opening of movable throttle 23 corresponding to an increase in the vehicle speed on the basis of the vehicle signal given from a vehicle speed sensor 27. In other words, since the degree of opening of movable throttle 23 increases corresponding to an increase in the vehicle speed and the hydraulic pressure between both the throttles 23 and 24 becomes high or low corresponding to the degree of opening, it is possible to introduce hydraulic pressure corresponding to the vehicle speed into the annular oil chamber 22 at the hydraulic reaction power unit 20.

In the power steering apparatus of the present invention constructed as the above-mentioned, when the steering wheel is subjected to the steering torque, the rotation of output shaft 3 thereby is converted into sliding motion of the nut member 6 through the recirculating ball screw at the outer periphery of output shaft 3 and an inner periphery of the nut member 6. Furthermore, the sliding motion is converted through the rack 60 into rotation of the sector gear 8 engageable therewith, thereby obtaining the manual force $W_r$. On the other hand, at the hydraulic cylinder constructed as the above-mentioned, the hydraulic pressure supplied through the hydraulic control valve 10 corresponding to the steering torque slides the nut member 6 which functions as a piston, the sliding motion is converted similarly through the rack 60 into the rotation of sector gear 8 engageable therewith, thereby obtaining the steering assisting power $W_s$, and the resultant force (total resultant force W) of manual force $W_r$ and steering assisting power $W_s$ performs steering. The total resultant force W is given in the following equation obtained by substituting the equations (2) and (3)

into that (1):

$$W = T_r \cdot \frac{\pi \cdot m \cdot Z}{p} + A \cdot P_m \cdot \frac{m \cdot Z}{2} \quad \cdots (4)$$

The manual force $W_r$ for steering is obtained in such a manner that the steering torque $T_r$ applied to the steering wheel is converted by a conversion rate of $\pi mZ/p$ due to the recirculating ball screw and engagement of the rack 60 with the sector gear 8. Similarly, the steering assisting power $W_s$ is obtained so that the hydraulic strength $AP_m$ generated by the hydraulic cylinder is converted by a conversion rate of $mZ/2$ due to engagement of rack 60 with the sector gear 8. The present inventor has known that since the steering assisting power $W_s$ is represented by the second term in the equation (4), at the converting means for converting the action of hydraulic cylinder into the steering motion, concretely, between the rack 60 at the outer periphery of nut member 6 and the sector gear 8, when the magnitude of rotation of sector gear 8 in response to a specified magnitude of sliding motion of nut member 6 is larger at the central side of the rotation range of steering wheel than at the end side thereof in other words, at the central side of the rotation range of sector gear 8 than at the end side thereof, a conversion rate $mZ/2$ increases following an increase in the steering angle, resulting in that the steering assisting power $W_s$ increasing as the steering angle increases is obtainable without increasing the charged hydraulic pressure $P_m$ to the hydraulic cylinder and the cylinder's area A.

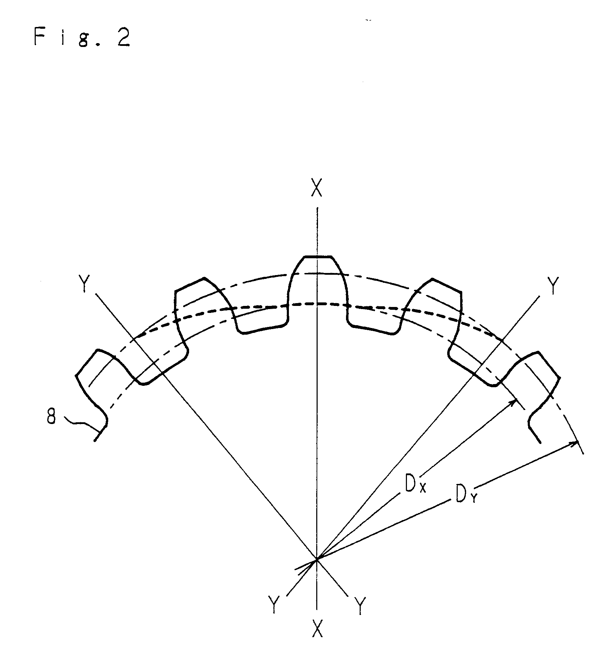

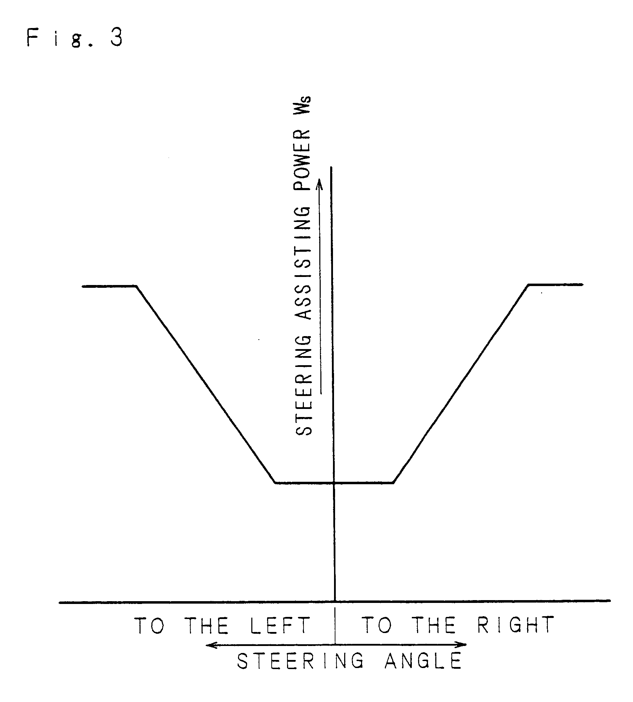

It is realizable by using as the sector gear 8 a profile shifted gear whose pitch diameter is smaller at the central side of a rotation range than at the end side thereof as well-known from JP-A-4635525 that the magnitude of rotation of the sector gear 8 in response to a specified magnitude of sliding motion of nut member 6 is changed. In Fig. 2, the tooth profile of such the sector gear 8 is shown. The sector gear 8, as shown in Fig. 2, is cut of teeth at both sides of the rotation center line X-X so as to have a pitch diameter sequentially increasing in a manner of extending along the broken line in the drawing through a constant portion of a predetermined width at both sides of the line X-X to the lines Y-Y showing both ends of the rotation range. When the nut member 6 slides by a pressure difference generated between both the oil chambers $S_1$ and $S_2$, the sector gear 8 rotates at only an angle obtained by dividing the sliding length by the pitch radius. In the power steering apparatus of the present invention, since the sector gear 8 has the pitch diameter variable as the above-mentioned, the magnitude of rotation created at the sector gear 8 in response to a specified length of sliding motion of nut member 6 decreases as the rotation leads to both ends of rotation range. The pitch diameter of gear, as well-known, is a product of multiplying the module m by the number Z of teeth. The steering assisting power $W_s$ generated by the hydraulic cylinder provided with the nut member 6 as the piston is represented by the second term at the equation (4), in which the product $(m \cdot Z)$ of module m and tooth number Z is included. When the sector gear 8 as shown in Fig. 2 is used, the magnitude of steering assisting power $W_s$ is smaller at the central side of the rotation range of sector gear 8 than at the end side thereof, in other words, at the central side of the rotation range of steering wheel than at the end side thereof. Fig. 3 shows the relation between the steering angle and the steering assisting power $W_s$ obtained thereby at the power steering apparatus of the present invention.

Since the manual force $W_r$ shown in the first term at the equation (4) includes the product of module m and tooth number Z, the manual force $W_r$ obtained in response to the constant steering torque $T_r$ applied to the steering wheel also increases following an increase in steering angle. Thus, in the power steering apparatus of the present invention, the total resultant force W for steering increases following an increase in the rotation angle of steering wheel, whereby when large steering is repeated when the car is put into a garage or moved widthwise, it is possible to reduce a burden of labor required to operation of the steering wheel. At the center of rotation range of steering wheel, that is, during the straight running, the steering assisting power $W_s$ is small so that the hydraulic reaction power unit 20 as shown in Fig. 1 is also used to sufficiently ensure the running safety when the car is running straight at high speed.

As this invention may be embodied in several forms without departing from the spirit of essential characteristics thereof, the present embodiment is therefore illustrative and not restrictive.

**Claims**

1. A power steering apparatus for a vehicle, comprising:
   a housing (1),
   an input shaft (2) and an output shaft (3) coaxially disposed in said housing (1),

a torsion bar (4) connecting said input shaft (2) and output shaft (3),

a hydraulic cylinder (5) having a piston (6) disposed slidably in said housing (1) so that the piston (6) engages with said output shaft by a ball-screw, with two sealed chambers being disposed at opposite sides of said piston (6),

a pump (P) supplying liquid to said hydraulic cylinder (5),

a control valve (10), disposed near said input shaft (2), controlling the liquid supplied to said hydraulic cylinder (5) in response to a torsion of said torsion bar (4),

at least one plunger (21) inserted slidably in a hole formed therefore in said hydraulic cylinder adjacent an inner end of said output shaft (3), said at least one plunger (21) being pressed to said input shaft (2) by hydraulic pressure for applying a reaction force to the input shaft (2) in dependence of the vehicle speed, and

a rotatably supported sector gear (8) engaging with a rack (60) formed at a surface of said piston (6),

**characterized in**

that the angle by which said sector gear (8) rotates in response to a specified sliding movement of said piston (6) is larger within a predetermined central portion of a rotation range of the sector gear (8) and varies so as to provide a steering assisting force which increases linearly from a first value corresponding to said central portion to higher second value at end portions of said rotation range.

2. A power steering apparatus as set forth in claim 1, characterized in that said sector gear (8) is a profile-shifted gear which has a pitch diameter smaller at said central portion of a rotation range thereof than at said end portions of the rotation range and varies therebetween so as to generate said linearly varying steering assisting force.

**Patentansprüche**

1. Servolenkvorrichtung für ein Fahrzeug, mit:

einem Gehäuse (1),

einer Antriebswelle (2) und einer Abtriebswelle (3), die in dem Gehäuse (1) koaxial angeordnet sind,

einem Torsionsstab (4), der die Antriebswelle (2) und die Abtriebswelle (3) miteinander verbindet,

einem Hydraulikzylinder (5), der einen Kolben (6) aufweist, der in dem Gehäuse (1) gleitend verschiebbar angeordnet ist, so daß der Kolben (6) durch eine Kugelumlaufspindel mit der Abtriebswelle zusammengreift, wobei an entgegengesetzten Seiten des Kolbens (6) zwei abgedichtete Kammern angeordnet sind,

einer Pumpe (P), die dem Hydraulikzylinder (5) Flüssigkeit zuführt,

einem Steuerventil (10), das nahe der Antriebswelle (2) angeordnet ist und in Reaktion auf eine Verdrehung der Torsionsstange (4) die dem Hydraulikzylinder (5) zugeführte Flüssigkeit steuert,

mindestens einem Stößel (21), der in ein dafür ausgebildetes Loch in dem Hydraulikzylinder benachbart zu dem inneren Ende der Abtriebswelle (3) gleitend verschiebbar eingesetzt ist, wobei der mindestens eine Stößel (21) durch Hydraulikdruck gegen die Antriebswelle (2) gedrückt wird, um in Abhängigkeit von der Fahrzeuggeschwindigkeit eine Reaktionskraft auf die Antriebswelle (2) aufzubringen, und einem drehbar gelagerten Zahnsegment (8), das mit einer an einer Fläche des Kolbens (6) ausgebildeten Zahnstange (60) zusammengreift,

**dadurch gekennzeichnet,**

daß der Winkel, um den sich das Zahnsegment (8) in Reaktion auf eine spezifizierte Gleitbewegung des Kolbens (6) bewegt, in einem vorbestimmten mittleren Bereich eines Drehbereiches des Zahnsegmentes (8) größer ist und derart variiert, daß eine Lenkhilfskraft erzeugt wird, die von einem ersten Wert an, der dem mittleren Bereich entspricht, zu einem höheren zweiten Wert an den Endbereichen des Drehbereiches linear zunimmt.

2. Servolenkvorrichtung nach Anspruch 1, dadurch gekennzeichnet, daß das Zahnsegment (8) ein profilversetztes Zahnrad ist, das einen Teilungsdurchmesser aufweist, der an dem mittleren Bereich seines Drehbereiches geringer ist als an den Endbereichen des Drehbereiches und dazwischen so variiert, daß die linear variierende Lenkhilfskraft erzeugt wird.

**Revendications**

1. Dispositif de direction assistée pour véhicule, comprenant :

un boîtier (1),

un arbre d'entrée (2) et un arbre de sortie (3) disposés coaxialement dans ledit boîtier (1),

une barre de torsion (4) reliant ledit arbre d'entrée (2) audit arbre de sortie (3),

un vérin hydraulique (5) ayant un piston (6) monté coulissant dans ledit boîtier (1) de façon que le piston (6) soit on prise avec ledit arbre de sortie par l'intermédiaire d'un filetage à bille, deux chambres formées étant disposées sur les côtés opposés dudit piston (6),

une pompe (P) alimentant ledit vérin hydraulique (5) en liquide,

un distributeur de commande (10), disposé près dudit arbre d'entrée (2), commandant le liquide fourni audit vérin hydraulique (5) en fonction de la torsion de ladite barre de torsion (4),

au moins un plongeur (21) inséré de façon coulissante dans un trou formé à cet effet dans ledit vérin hydraulique au voisinage immédiat d'une extrémité intérieure dudit arbre de sortie (3), ledit au moins un plongeur (21) étant poussé contre ledit arbre d'entrée (2) par la pression hydraulique afin d'appliquer une force de réaction à l'arbre d'entrée (2) qui dépend de la vitesse du véhicule, et

un secteur denté (8) monté en rotation en prise avec une crémaillère (60) formée sur une surface dudit piston (6)

caractérisé en ce que

l'angle dont ledit secteur denté (8) tourne en réaction à un déplacement coulissant spécifié dudit piston (6) est plus grand à l'intérieur d'une partie centrale prédéterminée d'une plage de rotation du secteur denté (8) et varie de façon à fournir une force d'assistance à la direction qui augmente linéairement depuis une première valeur correspondant à ladite partie centrale jusqu'à une seconde valeur plus élevée aux parties d'extrémité de ladite plage de rotation.

2. Dispositif de direction assistée selon la revendication 1, caractérisé en ce que ledit secteur denté (8) est une denture à profil décalé qui a un diamètre primitif plus petit dans ladite partie centrale de sa plage de rotation que dans lesdites parties d'extrémité de la plage de rotation et qui varie entre celles-ci de façon à engendrer ladite force d'assistance à la direction variant linéairement.

Fig. 1

ELECTRONIC
CONTROLLER

VEHICLE SPEED
SENSOR

EP 0 418 763 B1

Fig. 2

Fig. 3